# EUROPÄISCHE PATENTSCHRIFT

(11) **EP 3 578 023 B1**
(45) Veröffentlichungstag und Bekanntmachung des Hinweises auf die Patenterteilung: **04.11.2020**
(21) Anmeldenummer: 19175393.8
(22) Anmeldetag: 20.05.2019
(51) Int. Cl.: A01B 19/02, A01B 49/02

(54) **BODENBEARBEITUNGSGERÄT**
SOIL CULTIVATION DEVICE
APPAREIL DE TRAITEMENT DU SOL

(30) Priorität: 07.06.2018 DE 202018103185 U
(43) Veröffentlichungstag der Anmeldung: 11.12.2019
(73) Patentinhaber: Waas, Rudolf, 94405 Landau an der Isar (DE)
(72) Erfinder: Waas, Rudolf, 94405 Landau an der Isar (DE)
(74) Vertreter: Wolf, Gerhard

(56) Entgegenhaltungen:
- AT-U1- 3 991
- US-A- 1 974 869
- US-A1- 2017 079 196
- US-A1- 2017 127 602

## Beschreibung

Die Erfindung betrifft ein Bodenbearbeitungsgerät, insbesondere einen Grubber zur nichtwendenden Bodenbearbeitung.

Grubber zur Bodenbearbeitung sind hinlänglich bekannt. Insbesondere sind Feingrubber bekannt, die zur Saatbettbereitung verwendet werden. Zudem sind sog. Schwergrubber bekannt, die den Ackerboden ohne vorheriges Pflügen krumentief lockern (sog. pfluglose Bodenbearbeitung).

Nachteilig an den bekannten Grubbern ist, dass diese nur sehr spezifisch eingesetzt werden können. Insbesondere Schwergrubber, die beispielsweise eine tiefe Bodenbearbeitung bis zu 40cm ermöglichen, haben den Nachteil, dass diese nur sehr schwer durch den Boden gezogen werden können, so dass eine hohe Schlepperzugkraft nötig ist und diese die Erde nicht nur auflockern, sondern auch sehr viel Erde mitführen. Dies führt insgesamt zu sehr hohem Kraftstoffverbrauch des eingesetzten Schleppers.

Aus den Druckschriften US 2017/0079196 A1, AT 3991 U1, US 1974869A und US 2017/127602 A1 sind Bodenbearbeitungsgeräte in verschiedenen Ausgestaltungen bekannt geworden.

Ausgehend hiervon ist es Aufgabe der Erfindung, ein Bodenbearbeitungsgerät anzugeben, das vielseitig einsetzbar ist, eine verhältnismäßig geringe Zugkraft erfordert und zudem eine gute Lockerung des Bodens ermöglicht.

Die Aufgabe wird durch ein Bodenbearbeitungsgerät gemäß den Merkmalen des Patentanspruchs 1 gelöst.

Die Erfindung bezieht sich auf ein Bodenbearbeitungsgerät. Das Bodenbearbeitungsgerät umfasst mehrere Geräteabschnitte, die bezogen auf eine Zugrichtung des Bodenbearbeitungsgeräts seitlich nebeneinander angeordnet sind. Die Geräteabschnitte weisen jeweils zumindest einen Lockerungszinken und zumindest eine erste und zweite Lockerungsschar auf. Der Lockerungszinken eines Geräteabschnitts ist bezogen auf die Zugrichtung vor den Lockerungsscharen dieses Geräteabschnitts vorgesehen, d.h. zunächst wird ein Bodenbereich von dem Lockerungszinken und anschließend erst von den Lockerungsscharen bearbeitet. Der Lockerungszinken ist in einer senkrecht zur Zugrichtung verlaufenden Querrichtung zwischen den Lockerungsscharen angeordnet. Dabei ist der in Zugrichtung gemessene Abstand der zweiten Lockerungsschar zum Lockerungszinken größer ist als der in Zugrichtung gemessene Abstand der ersten Lockerungsschar zum Lockerungszinken. In anderen Worten sind die Lockerungsscharen nicht nur quer zur Zugrichtung zueinander versetzt angeordnet sondern zudem in einem Längsversatz (bezogen auf die Zugrichtung).

Die erste und zweite Lockerungsschar ist dabei nichtsymmetrisch ausgebildet, wobei die erste Lockerungsschar eine Bodenbewegung in eine erste Richtung und die zweite Lockerungsschar eine Bodenbewegung in eine zweite Richtung, die der ersten Richtung entgegengesetzt ist, bewirkt.

Der wesentliche Vorteil des Bodenbearbeitungsgeräts besteht darin, dass durch den Lockerungszinken eine Furche gebildet wird, in die der gelockerte Boden zumindest teilweise durch die Lockerungsschare verlagert werden kann, was eine gute Durchmischung des Bodens ermöglicht. Der Längsversatz der Lockerungsschare bewirkt, dass die Lockerungsschare nicht auf gleicher Höhe arbeiten und damit durch die seitliche Verlagerung des Bodens ein Staudruck erzeugt wird, sondern, dass der von der jeweiligen Lockerungsschar bewegte Boden frei seitlich ausweichen kann. Damit wird eine gute Lockerungswirkung bei gleichzeitig geringem Zugkraftbedarf erreicht.

Gemäß einem Ausführungsbeispiel ist der Lockerungszinken eines Geräteabschnitts in Querrichtung gesehen mittig oder im Wesentlichen mittig zwischen den Lockerungsscharen dieses Geräteabschnitts angeordnet. Der in Querrichtung gemessene Abstand der Lockerungsschare kann dabei zwischen 40 cm und 80 cm, insbesondere zwischen 50 cm und 70 cm, besonders bevorzugt 60 cm betragen. Dadurch wird durch den Lockerungszinken eine zwischen den Lockerungsscharen verlaufende, mittige Furche gebildet, in die hinein beidseitig von den jeweiligen Lockerungsscharen der gelockerte Boden seitlich hineinverschoben werden kann. Dadurch wird eine gute Bodenlockerung ohne Wenden des Bodens erreicht.

Gemäß einem Ausführungsbeispiel ist ein in Zugrichtung gemessener Versatz (d.h. der Längsversatz) der ersten und zweiten Lockerungsschar größer ist als die in Zugrichtung gemessene Länge der Lockerungsscharen. Dadurch wird erreicht, dass die Lockerungsscharen nicht gegeneinander arbeiten, d.h. die seitliche Bodenverlagerung der ersten Lockerungsschar sich auf die seitliche Bodenverlagerung der zweiten Lockerungsschar auswirkt, sondern die seitliche Bodenverlagerung der beiden Lockerungsscharen ist durch den Längsversatz voneinander entkoppelt. Dadurch kann die nötige Zugkraft weiter reduziert werden.

Gemäß einem Ausführungsbeispiel weist die erste und zweite Lockerungsschar jeweils in einem unteren Bereich einen zu einer Geräteabschnittsmittelachse, die parallel zur Zugrichtung verläuft, nach innen gebogenen Scharbereich, insbesondere einen zur Geräteabschnittsmittelachse hin konkav gewölbten Scharbereich auf. Durch die Wölbung der Lockerungsschar kann ein seitliches Verdrängen des Bodens ohne Wenden erreicht werden. Der nach innen gebogene Scharbereich kann vorzugsweise eine vorderseitige Schneide aufweisen, um ein Durchschneiden des Bodens zu erreichen.

Gemäß einem Ausführungsbeispiel weisen die Lockerungsschare einen den Boden durchschneidenden ersten Scharabschnitt und einen die Scharspitze bildenden zweiten Scharabschnitt auf. Der erste Scharabschnitt ist dabei oberhalb des zweiten Scharabschnitts vorgesehen.

Gemäß einem Ausführungsbeispiel weist der zweite Scharabschnitt eine in Zugrichtung gemessene größere Länge auf als der erste Scharabschnitt. Dadurch steht der zweite Scharabschnitt vorderseitig und rückseitig gegenüber dem ersten Scharabschnitt vor.

Gemäß einem Ausführungsbeispiel ist der erste Scharabschnitt nach innen gebogen, und zwar zu einer Geräteabschnittsmittelachse hin, die parallel zur Zugrichtung verläuft. Der erste Scharabschnitt der ersten Lockerungsschar ist in eine entgegengesetzte Richtung gebogen wie der erste Scharabschnitt der zweiten Lockerungsschar. Dadurch kann ein seitliches Verdrängen des Bodens ohne Wenden erreicht werden.

Gemäß einem Ausführungsbeispiel weist der zweite Scharabschnitt zumindest eine gefaste Kante auf. Dadurch wird das Eindringen der Schar in den Boden und die seitliche Verlagerung des Bodens verbessert.

Gemäß einem Ausführungsbeispiel weist der zweite Scharabschnitt in einem Mittelbereich eine parallel oder im Wesentlichen parallel zu einer Geräteabschnittsmittelachse verlaufende Längsfase auf. Durch diese Längsphase wird die seitliche Verlagerung des Bodens gefördert. Gemäß einem Ausführungsbeispiel weist der zweite Scharabschnitt in einem vorderen und/oder hinteren Bereich eine schräg zu einer Geräteabschnittsmittelachse verlaufende Schrägfase auf. Dadurch entsteht ein schiffskörperartiger, zweiter Scharabschnitt, der die Scharspitze der Lockerungsschar ausbildet und mittels dem die Lockerungsschar in erleichterter Weise in den Boden eingebracht werden kann.

Gemäß dem Gegenstand des Anspruchs 1 bewirken die erste und zweite Lockerungsschar jeweils ein einander entgegengesetzt gerichtetes, seitliches Verlagern des Bodens in Richtung einer durch den Lockerungszinken gezogenen Furche. Durch die seitliche Verlagerung des Bodens in die durch den Lockerungszinken bewirkte Furche wird eine vorteilhafte Durchmischung des Bodens ohne Aufstauen erreicht. Gemäß einem Ausführungsbeispiel bewirken die erste und zweite Lockerungsschar ein Lockern des Bodens ohne Wenden desselben. Das Lockern erfolgt insbesondere durch das Unterfahren des Bodens durch den zweiten Scharabschnitt und das seitliche Verschieben des Bodens durch den ersten Scharabschnitt. Dadurch wird organisches Material, beispielsweise nach dem Abernten eines Feldes zurückbleibendes organisches Material, oberflächennah in den Boden eingearbeitet. Gemäß einem Ausführungsbeispiel ist unmittelbar vor der ersten und zweiten Lockerungsschar jeweils eine Sech, insbesondere eine Scheibensech angeordnet. Durch die Sech wird der zu bearbeitende Boden und ggf. darauf befindliche Reste von organischem Material durchschnitten. Dadurch kann zum einen ein Einschneiden des Bodens erreicht werden, wodurch die Zugkraft verringert werden kann, zum anderen wird ggf. auf dem Acker befindliches organisches Material durchschnitten, um ein Verstopfen der Lockerungsschare zu verhindern. Gemäß einem Ausführungsbeispiel ist in Zugrichtung hinter den Lockerungsscharen eine Bodennachbearbeitungseinheit in Form eines Nachläufers, beispielsweise eine Walze, insbesondere eine Klingenwalze, vorgesehen. Auch andere Arten von Bodennachbearbeitungseinheiten sind denkbar. Dadurch werden, je nach Ausformung des Nachläufers beispielsweise eine bessere Krümelung, eine Verdichtung und/oder eine Durchmischung des Bodens erreicht.

Gemäß einem Ausführungsbeispiel weist das Bodenbearbeitungsgerät eine Bodenbearbeitungstiefe bis zu 40cm auf. Dadurch lässt sich das Bodenbearbeitungsgerät als Feingrubber oder aber auch als Schwergrubber zur pfluglosen Bodenbearbeitung einsetzen.

Die Ausdrücke "näherungsweise", "im Wesentlichen" oder "etwa" bedeuten im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren.

Die Erfindung wird im Folgenden anhand von Figuren an Ausführungsbeispielen näher erläutert. Dabei zeigen:
- Fig. 1: beispielhaft eine schematische Ansicht einer Ausführungsform eines Bodenbearbeitungsgeräts in einer Draufsichtdarstellung;
- Fig. 2: beispielhaft eine schematische Ansicht einer Ausführungsform eines Bodenbearbeitungsgeräts in einer Seitendarstellung;
- Fig. 3: beispielhaft eine schematische Teilansicht einer Ausführungsform eines Bodenbearbeitungsgeräts in einer ersten perspektivischen, rückseitigen Darstellung;
- Fig. 4: beispielhaft eine schematische Teilansicht einer Ausführungsform eines Bodenbearbeitungsgeräts in einer zweiten perspektivischen, rückseitigen Darstellung;
- Fig. 5: beispielhaft eine schematische Teilansicht einer Ausführungsform eines Bodenbearbeitungsgeräts in einer perspektivischen, vorderseitigen Darstellung;
- Fig. 6: beispielhaft eine schematische, perspektivische Darstellung einer Lockerungsschar; und
- Fig. 7: beispielhaft eine schematische, perspektivische Darstellung eines zweiten Scharabschnitts einer Lockerungsschar.

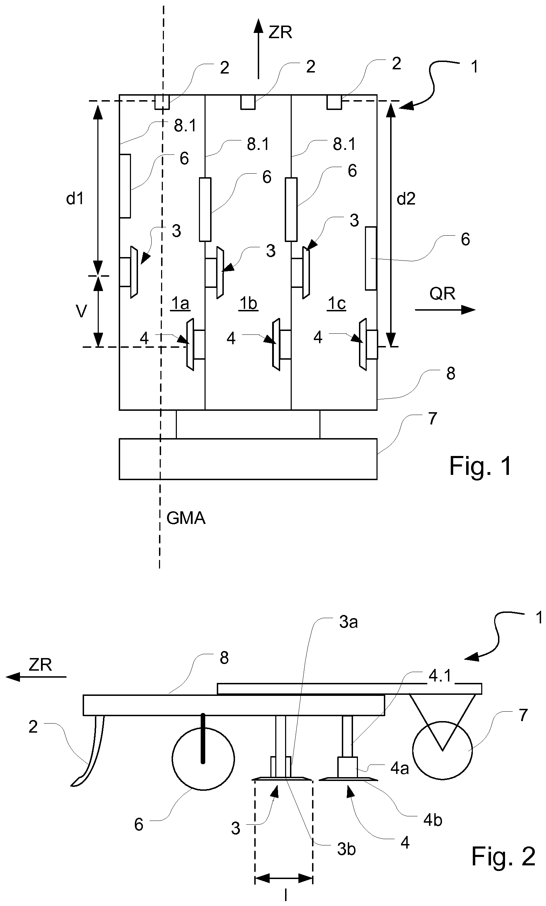

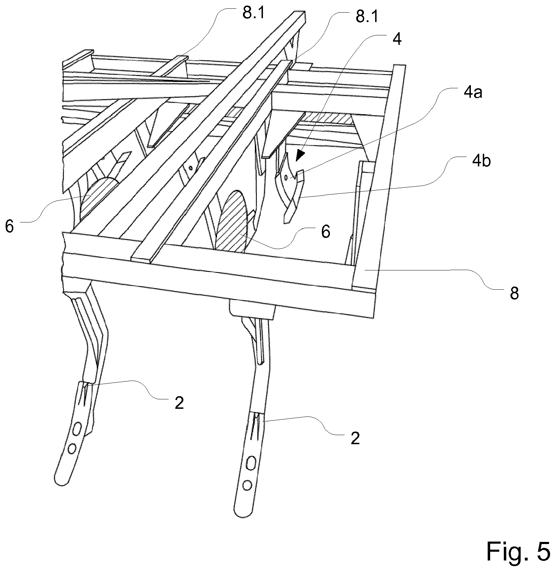

In den Figuren 1 bis 5 ist ein Bodenbearbeitungsgerät 1 schematisch in unterschiedlichen Ansichten in einem Ausführungsbeispiel dargestellt.

Das Bodenbearbeitungsgerät 1 umfasst in an sich bekannter Weise einen Rahmen 8, an dem die nachfolgend näher beschriebenen Aggregate bzw. Anbauteile befestigt sind. Über eine nicht dargestellte Aufnahme, die mit dem Rahmen 8 gekoppelt ist, wird das Bodenbearbeitungsgerät 1 mit einem Zugfahrzeug gekoppelt, um das Bodenbearbeitungsgerät 1 in Zugrichtung ZR zu bewegen und dabei eine Bodenbearbeitung durchzuführen. Die Bodenbearbeitung ist insbesondere eine nichtwendende Bodenbearbeitung, die zur Lockerung und Krümelung des Bodens sowie zur Unkrautbekämpfung und Einarbeitung von humosen Materialien in den Boden dient.

Wie insbesondere der Fig. 1 zu entnehmen ist, weist das Bodenbearbeitungsgerät 1 mehrere Geräteabschnitte 1a, 1b, 1c auf, die gleich oder im Wesentlichen gleich aufgebaut sind. Die Geräteabschnitte 1a, 1b, 1c sind in Querrichtung QR gesehen, die senkrecht zur Zugrichtung ZR verläuft, seitlich aneinander anschließend vorgesehen. Die Geräteabschnitte 1a, 1b, 1c können beispielsweise durch einen Abschnitt des Rahmens 8 gebildet werden, wobei die einzelnen Geräteabschnitte 1a, 1b, 1c beispielsweise durch Längsträger 8.1 des Rahmens 8 voneinander getrennt sind.

Nachfolgend wird exemplarisch ein Geräteabschnitt 1a, 1b, 1c mit den diesem Geräteabschnitt zugeordneten Aggregaten näher erläutert.

Die Geräteabschnitte 1a, 1b, 1c weisen jeweils zumindest einen Lockerungszinken 2 auf. Dieser Lockerungszinken 2 ist insbesondere ein Tiefenlockerungszinken, der für Bearbeitungstiefen bis zu 40 cm eingesetzt werden kann. Dieser ist beispielsweise starr, d.h. nichtfedernd an dem Rahmen 8 vorgesehen. Die Länge des Lockerungszinkens 2 kann wesentlich größer sein als die Breite des Lockerungszinkens 2. Beispielsweise kann die Länge des Lockerungszinkens 2 50cm oder mehr betragen wohingegen die Breite des Lockerungszinkens 2 beispielsweise zwischen 2 cm und 10 cm, insbesondere zwischen 5cm und 7 cm beträgt.

Der Lockerungszinken 2 ist in Querrichtung QR gesehen vorzugsweise mittig oder im Wesentlichen mittig in dem jeweiligen Geräteabschnitt 1a, 1b, 1c vorgesehen. Dadurch kann mittels des Lockerungszinkens 2 eine mittige Furche im Boden gezogen werden, in die hinein anschließend eine Bodenbewegung durch nachfolgende Aggregate erfolgen kann.

Bezogen auf die Arbeitsreihenfolge und in Zugrichtung ZR gesehen hinter den Lockerungszinken 2 sind in dem Geräteabschnitt 1a, 1b, 1c jeweils zumindest zwei Lockerungsschare 3, 4 vorgesehen, und zwar derart, dass in dem jeweiligen Geräteabschnitt 1a, 1b, 1c der Abstand d1 einer ersten Lockerungsschar 3 zum Lockerungszinken 2 kleiner ist als der Abstand d2 der zweiten Lockerungsschar 4 zu diesem Lockerungszinken 2. In anderen Worten weisen die Lockerungsschare 3, 4 zueinander einen Versatz V in Zugrichtung ZR auf. Dabei sind sowohl der Lockerungszinken 2 als auch die zwei Lockerungsschare 3, 4 einem einzigen Geräteabschnitt 1a, 1b, 1c zugeordnet.

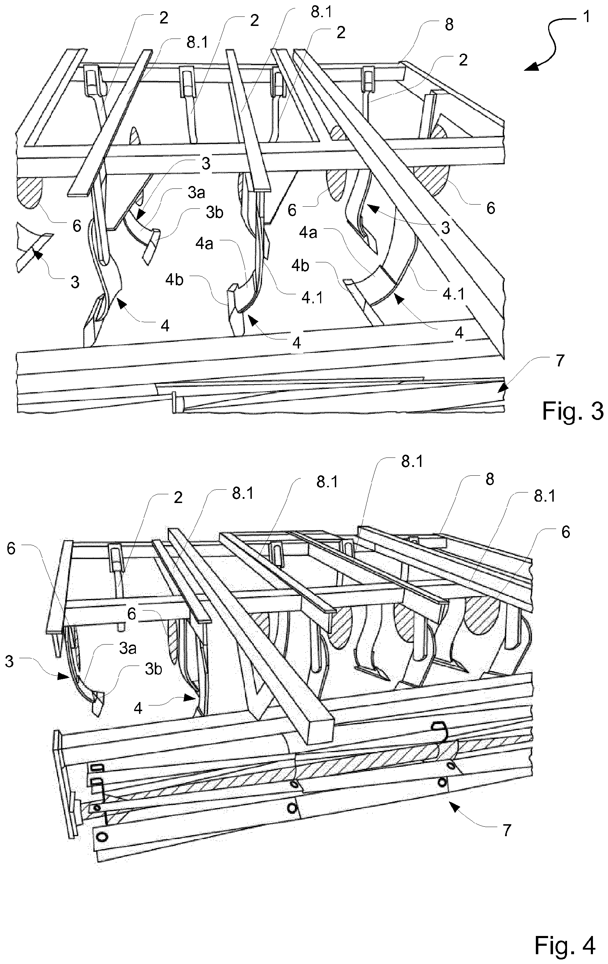

Wie insbesondere in Fig. 3 und 4 zu erkennen, sind die Lockerungsschare 3, 4 gegeneinander arbeitend ausgebildet, und zwar derart, dass der Boden durch die erste Lockerungsschar 3 in eine erste Raumrichtung und durch die zweite Lockerungsschar 4 in eine zweie Raumrichtung verlagert wird, wobei die erste und zweite Raumrichtung entgegengesetzt zueinander verlaufen. Insbesondere sind die Lockerungsschare 3, 4 nicht symmetrisch ausgebildet und verlagern den Boden lediglich zu einer Seite hin. Somit weist die Lockerungsschar 3 beispielsweise eine linke Ausbildung und die Lockerungsschar 4 eine rechte Ausbildung auf. Die Lockerungsschare 3, 4 können insbesondere eine Bewegung des Bodens in die Furche hinein bewirken, die zuvor durch den Lockerungszinken 2 geschaffen wurde. Dadurch kann ein Mitziehen von Erde durch das Bodenbearbeitungsgerät weitestgehend vermieden werden, da die Lockerung im Wesentlichen durch ein seitliches Versetzen des Bodens und nicht durch eine Verlagerung in Zugrichtung ZR des Bodenbearbeitungsgeräts 1 erfolgt.

Durch die in Zugrichtung ZR gesehen versetzte Anordnung der Lockerungsschare 3, 4 (d.h. unterschiedliche Abstände d1, d2 zum Lockerungszinken 2) staut sich das von den Lockerungsscharen 3, 4 zur Seite bewegte Material nicht zwischen den Lockerungsscharen 3, 4 sondern das Material kann seitlich ausweichen, wodurch die Zugkraft zum Bewegen des Bodenbearbeitungsgeräts 1 über den zu bearbeitenden Boden reduziert wird.

Vor den Lockerungsscharen 3, 4 kann eine Sech, insbesondere eine Scheibensech 6 vorgesehen sein, über die organisches Material, beispielsweise Mais- oder Strohreste durchschnitten werden, um ein Verstopfen der Lockerungsschare 3, 4 zu verhindern. An dem Übergang zwischen zwei Geräteabschnitten 1a, 1b, 1c kann eine einzelne Scheibensech 6 für mehrere hintereinander angeordnete Lockerungsschare 3, 4 vorgesehen sein, wobei die Lockerungsschare 3, 4 unterschiedlichen Geräteabschnitten 1a, 1b, 1c zugeordnet sind.

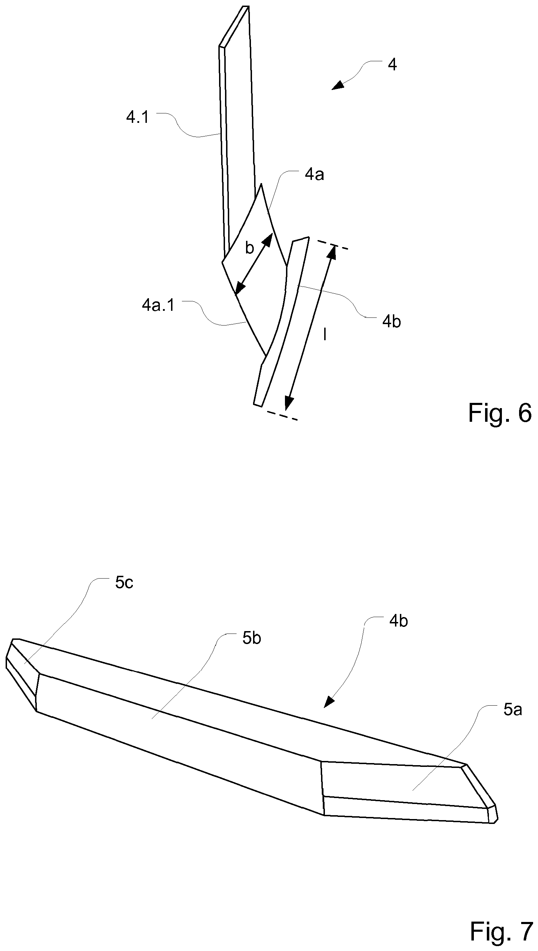

Fig. 6 zeigt eine Lockerungsschar 4 als rechte Ausführung in einer Detaildarstellung. Die Lockerungsschar 3 ist als gegenläufig arbeitende Lockerungsschar analog dazu aufgebaut, jedoch als linke Ausführung, wie dies insbesondere in den Figuren 3 und 4 zu erkennen ist.

Die Lockerungsschar 4 besteht aus einem plattenartigen Schargrundträger 4.1, mittels dem die Lockerungsschar 4 an dem Rahmen 8 fixierbar ist. Der Schargrundträger 4.1 kann in einem vom Rahmen 8 beabstandeten, in den zu bearbeitenden Boden eintauchenden, unteren Bereich gewölbt ausgebildet sein. Die Wölbung ist derart ausgebildet, dass der untere Bereich des Schargrundträgers 4.1 zur Geräteabschnittsmittelachse GMA nach innen hin absteht. Der Schargrundträger 4.1 kann aus einem Flachmaterial, insbesondere einem Flacheisen gebildet sein.

An dem Schargrundträger 4.1 können ein erster Scharabschnitt 4a und ein zweiter Scharabschnitt 4b vorgesehen sein, die zumindest teilweise in den zu bearbeitenden Boden eintauchen und dabei die Bodenbearbeitung bzw. Lockerung vornehmen.

Der erste Scharabschnitt 4a bildet eine Art Gleitabschnitt und ist beispielsweise ebenfalls aus einem Flachmaterial gebildet. Er weist vorzugsweise ebenfalls eine Wölbung zur Geräteabschnittsmittelachse GMA hin auf, so dass der durch die Lockerungsschar 4 gelockerte Boden in Richtung dieser Geräteabschnittsmittelachse GMA hin bewegt wird. Dies erfolgt ohne Wenden des Bodens.

An der Vorderseite des ersten Scharabschnitts 4a kann eine Schneide 4a.1 angeformt sein, so dass die Lockerungsschar 4 leichter durch den zu lockernden Boden bewegt werden kann.

Der zweite Scharabschnitt 4b, der im Detail in Fig. 7 gezeigt ist, ist unterhalb des ersten Scharabschnitts 4a angeordnet und schließt vorzugsweise direkt an diesen an. Der zweite Scharabschnitt 4b bildet eine untere Scharspitze aus. Dieser ist länglich ausgebildet, wobei die Länge I des zweiten Scharabschnitts 4b (gemessen entlang der Längsachse des zweiten Scharabschnitts 4b) größer ist als die Breite b des ersten Scharabschnitts 4a (ebenfalls gemessen parallel oder im Wesentlichen parallel zur der Längsachse des zweiten Scharabschnitts 4b). Dadurch steht der zweite Scharabschnitt 4b vorder- und rückseitig gegenüber dem ersten Scharabschnitt 4a vor.

Um die seitliche Verdrängung des Bodens zu unterstützen, weist der zweite Scharabschnitt 4b mehrere Fasen auf. Dies ist insbesondere eine Längsfase 5a, die an einer parallel oder im Wesentlichen parallel zur Längsachse des zweiten Scharabschnitts 4b verlaufenden Seitenfläche vorgesehen ist.

Zudem weist der zweite Scharabschnitt 4b zur Ausformung von Spitzen vorder- und rückseitige Schrägflächen auf, die schräg zu der Längsachse des zweiten Scharabschnitts 4b verlaufen. An diesen Schrägflächen sind ebenfalls Fasen vorgesehen, und zwar Schrägfasen 5b und 5c.

In Zugrichtung hinter den Lockerungsscharen 3, 4 kann eine weitere Bodenbearbeitungseinheit 7 vorgesehen sein. Diese kann insbesondere eine Walze, insbesondere eine Klingenwalze o.ä. sein, mittels der eine Krümelung und/oder Verdichtung des Bodens erreicht wird.

Die den Boden bearbeitenden Aggregate des Bodenbearbeitungsgeräts 1, insbesondere die Lockerungszinken 2 und die Lockerungsscharen 3, 4 sind derart ausgebildet, dass eine Bodenbearbeitungstiefe bis zu 40cm möglich ist, so dass das Bodenbearbeitungsgerät 1 zur pfluglosen Bodenbearbeitung eingesetzt werden kann.

### Bezugszeichenliste

- 1: Bodenbearbeitungsgerät
- 1a, 1b, 1c: Geräteabschnitte
- 2: Lockerungszinken
- 3: erste Lockerungsschar
- 3a: erster Scharabschnitt
- 3b: zweiter Scharabschnitt
- 4: zweite Lockerungsschar
- 4a: erster Scharabschnitt
- 4a.1: Schneide
- 4b: zweiter Scharabschnitt
- 5a: Schrägfase
- 5b: Längsfase
- 5c: Schrägfase
- 6: Scheibensech
- 7: Bodennachbearbeitungseinheit
- 8: Rahmen
- 8.1: Längsträger

- b: Breite
- d1: Abstand
- d2: Abstand
- GMA: Geräteabschnittsmittelachse
- QR: Querrichtung
- V: Versatz
- ZR: Zugrichtung

## Patentansprüche

1. Bodenbearbeitungsgerät umfassend mehrere bezogen auf eine Zugrichtung (ZR) seitlich nebeneinander angeordnete Gerätabschnitte (1a, 1b, 1c), wobei die Geräteabschnitte (1a, 1b, 1c) zumindest einen Lockerungszinken (2) und zumindest eine erste und zweite Lockerungsschar (3, 4) aufweisen, wobei der Lockerungszinken (2) eines Geräteabschnitts (1a, 1b, 1c) bezogen auf die Zugrichtung (ZR) vor den Lockerungsscharen (3, 4) dieses Geräteabschnitts (1a, 1b, 1c) und in einer senkrecht zur Zugrichtung (ZR) verlaufenden Querrichtung (QR) zwischen den Lockerungsscharen (3, 4) angeordnet ist und wobei der in Zugrichtung (ZR) gemessene Abstand (d2) der zweiten Lockerungsschar (4) zum Lockerungszinken (2) größer ist als der in Zugrichtung (ZR) gemessene Abstand (d1) der ersten Lockerungsschar (3) zum Lockerungszinken (2), **dadurch gekennzeichnet, dass** die erste und zweite Lockerungsschar (3, 4) nichtsymmetrisch ausgebildet sind, wobei die erste Lockerungsschar (3) eine Bodenbewegung in eine erste Richtung und die zweite Lockerungsschar (4) eine Bodenbewegung in eine zweite Richtung, die der ersten Richtung entgegengesetzt ist, bewirkt und dass die erste und zweite Lockerungsschar (3, 4) jeweils ein einander entgegengesetzt gerichtetes, seitliches Verlagern des Bodens in Richtung einer durch den Lockerungszinken (2) gezogenen Furche bewirken.

2. Bodenbearbeitungsgerät nach Anspruch 1, **dadurch gekennzeichnet, dass** der Lockerungszinken (2) eines Geräteabschnitts (1a, 1b, 1c) in Querrichtung (QR) gesehen mittig oder im Wesentlichen mittig zwischen den Lockerungsscharen (3, 4) dieses Geräteabschnitts (1a, 1b, 1c) angeordnet ist.

3. Bodenbearbeitungsgerät nach Anspruch 1 oder 2, **dadurch gekennzeichnet, dass** ein in Zugrichtung (ZR) gemessener Versatz (V) der ersten und zweiten Lockerungsschar (3, 4) größer ist als die in Zugrichtung (ZR) gemessene Länge (l) der Lockerungsscharen (3, 4).

4. Bodenbearbeitungsgerät nach einem der vorhergehenden Ansprüche, **dadurch gekennzeichnet, dass** die erste und zweite Lockerungsschar (3, 4) jeweils in einem unteren Bereich einen zu einer Geräteabschnittsmittelachse (GMA), die parallel zur Zugrichtung (ZR) verläuft, nach innen gebogenen Scharbereich, insbesondere einen zur Geräteabschnittsmittelachse (GMA) hin konkav gewölbten Scharbereich aufweist.

5. Bodenbearbeitungsgerät nach einem der vorhergehenden Ansprüche, **dadurch gekennzeichnet, dass** die Lockerungsschare (3, 4) einen den Boden durchschneidenden ersten Scharabschnitt (3a, 4a) und einen die Scharspitze bildenden zweiten Scharabschnitt (3b, 4b) aufweist.

6. Bodenbearbeitungsgerät nach Anspruch 5, **dadurch gekennzeichnet, dass** der erste Scharabschnitt (3a, 4a) oberhalb des zweiten Scharabschnitts (3a, 4a) vorgesehen ist.

7. Bodenbearbeitungsgerät nach Anspruch 5 oder 6, **dadurch gekennzeichnet, dass** der zweite Scharabschnitt (3b, 4b) eine in Zugrichtung (ZR) gemessene größere Länge aufweist als der erste Scharabschnitt (3a, 4a).

8. Bodenbearbeitungsgerät nach einem der Ansprüche 5 bis 7, **dadurch gekennzeichnet, dass** der erste Scharabschnitt (3a, 4a) nach innen gebogen ist, und zwar zu einer Geräteabschnittsmittelachse (GMA) hin, die parallel zur Zugrichtung (ZR) verläuft.

9. Bodenbearbeitungsgerät nach einem der Ansprüche 5 bis 8, **dadurch gekennzeichnet, dass** der zweite Scharabschnitt (3b, 4b) zumindest eine gefaste Kante (5a, 5b, 5c) aufweist.

10. Bodenbearbeitungsgerät nach einem der Ansprüche 5 bis 9, **dadurch gekennzeichnet, dass** der zweite Scharabschnitt (3b, 4b) in einem Mittelbereich eine parallel oder im Wesentlichen parallel zu einer Geräteabschnittsmittelachse (GMA) verlaufende Längsfase (5b) aufweist.

11. Bodenbearbeitungsgerät nach einem der Ansprüche 5 bis 10, **dadurch gekennzeichnet, dass** der zweite Scharabschnitt (3b, 4b) in einem vorderen und/oder hinteren Bereich eine schräg zu einer Geräteabschnittsmittelachse (GMA) verlaufende Schrägfase (5a, 5c) aufweist.

12. Bodenbearbeitungsgerät nach einem der vorhergehenden Ansprüche, **dadurch gekennzeichnet, dass** die erste und zweite Lockerungsschar (3, 4) ein Lockern des Bodens ohne Wenden desselben bewirken.

13. Bodenbearbeitungsgerät nach einem der vorhergehenden Ansprüche, **dadurch gekennzeichnet, dass** unmittelbar vor der ersten und zweiten Lockerungsschar (3, 4) jeweils eine Sech, insbesondere eine Scheibensech (6) angeordnet ist.

14. Bodenbearbeitungsgerät nach einem der vorhergehenden Ansprüche, **dadurch gekennzeichnet, dass** in Zugrichtung hinter den Lockerungsscharen eine Bodennachbearbeitungseinheit (7), beispielsweise eine Walze, insbesondere eine Klingenwalze, vorgesehen ist.

## Claims

1. A soil cultivation device comprising a plurality of device sections (1a, 1b, 1c) arranged laterally in juxtaposition with respect to a towing direction (ZR), wherein said device sections (1a, 1b, 1c) include at least one loosening tine (2) and at least one first and second loosening share (3, 4), wherein the loosening tine (2) of a device section (1a, 1b, 1c) is arranged in front of the loosening shares (3, 4) of this device section (1a, 1b, 1c) with respect to said towing direction (ZR) and between the loosening shares (3, 4) in a transverse direction (QR) extending perpendicularly to said towing direction (ZR) and wherein the distance (d2) between the second loosening share (4) and the loosening tine (2) measured in the towing direction (ZR) is greater than the distance (d1) between the first loosening share (3) and the loosening tine (2) measured in the towing direction (ZR), **characterized in that** said first and second loosening shares (3, 4) are formed non-symmetrical, said first loosening share (3) causing a soil movement in a first direction and said second loosening share (4) causing a soil movement in a second direction opposite the first direction, and that said first and second loosening shares (3, 4) each cause an oppositely directed lateral displacement of the soil in the direction of a furrow created by said loosening tine (2).

2. The soil cultivation device according to claim 1, **characterized in that** the loosening tine (2) of a device section (1a, 1b, 1c) viewed in said transverse direction (QR) is centered or substantially centered between the loosening shares (3, 4) of this device section (1a, 1b, 1c).

3. The soil cultivation device according to claim 1 or 2, **characterized in that** an offset (V) of the first and second loosening shares (3, 4) measured in said towing direction (ZR) is greater than the length (1) of the loosening shares (3, 4) measured in said towing direction (ZR).

4. The soil cultivation device according to one of the preceding claims, **characterized in that** said first and second loosening shares (3, 4) each have, in a lower region, a share region bent inwards towards a device section center axis (GMA) extending in parallel to said towing direction (ZR), in particular a share region concavely curved inwards towards a device section center axis (GMA).

5. The soil cultivation device according to one of the preceding claims, **characterized in that** the loosening shares (3, 4) include a first share section (3a, 4a) cutting through the soil and a second share section (3b, 4b) forming the share tip.

6. The soil cultivation device according to claim 5, **characterized in that** said first share section (3a, 4a) is provided above said second share section (3a, 4a).

7. The soil cultivation device according to claim 5 or 6, **characterized in that** said second share section (3b, 4b) has a greater length measured in said towing direction (ZR) than said first share section (3a, 4a).

8. The soil cultivation device according to one of the claims 5 to 7, **characterized in that** said first share section (3a, 4a) is bent inwards, specifically towards a device section center axis (GMA) extending in parallel to said towing direction (ZR).

9. The soil cultivation device according to one of the claims 5 to 8, **characterized in that** said second share section (3b, 4b) has at least one beveled edge (5a, 5b, 5c).

10. The soil cultivation device according to one of the claims 5 to 9, **characterized in that** said second share section (3b, 4b), in a central region, has a longitudinal bevel (5b) extending in parallel or substantially in parallel to a device section center axis (GMA).

11. The soil cultivation device according to one of the claims 5 to 10, **characterized in that** said second share section (3b, 4b), in a front and/or rear region, has an oblique bevel (5a, 5c) extending obliquely with respect to a device section center axis (GMA).

12. The soil cultivation device according to one of the preceding claims, **characterized in that** said first and second loosening shares (3, 4) cause the soil to be loosened without turning it over.

13. The soil cultivation device according to one of the preceding claims, **characterized in that** a coulter, in particular a disc coulter (6), is arranged immediately in front of said first and second loosening shares (3, 4).

14. The soil cultivation device according to one of the preceding claims, **characterized in that** a soil post-processing unit (7), for example a roller, in particular a blade roller, is provided behind the loosening shares in the towing direction.

## Revendications

1. Appareil de travail du sol comprenant plusieurs portions d'appareil (1a, 1b, 1c) disposées latéralement les unes à côté des autres par rapport à une direction de traction (ZR), les portions d'appareil (1a, 1b, 1c) présentant au moins une dent d'ameublissement (2) et au moins un premier et un deuxième soc d'ameublissement (3, 4), la dent d'ameublissement (2) d'une portion d'appareil (1a, 1b, 1c) étant disposée en amont des socs d'ameublissement (3, 4) de cette portion d'appareil (1a, 1b, 1c) par rapport à la direction de traction (ZR) et étant disposée entre les socs d'ameublissement (3, 4) dans une direction transversale (QR) s'étendant perpendiculairement à la direction de traction (ZR), et la distance (d2) du deuxième soc d'ameublissement (4) par rapport à la dent d'ameublissement (2), mesurée dans la direction de traction (ZR), étant supérieure à la distance (d1) du premier soc d'ameublissement (3) par rapport à la dent d'ameublissement (2), mesurée dans la direction de traction (ZR),
**caractérisé en ce que**
le premier et le deuxième soc d'ameublissement (3, 4) sont réalisés non pas à symétrie, le premier soc d'ameublissement (3) provoquant un déplacement du sol dans une première direction et le deuxième soc d'ameublissement (4) provoquant un déplacement du sol dans une deuxième direction opposée à la première direction, et **en ce que**
le premier et le deuxième soc d'ameublissement (3, 4) provoquent respectivement des déplacements latéraux du sol dirigés en sens opposés l'un à l'autre, dans la direction d'un sillon tracé par la dent d'ameublissement (2).

2. Appareil de travail du sol selon la revendication 1,
**caractérisé en ce que** la dent d'ameublissement (2) d'une portion d'appareil (1a, 1b, 1c) est disposée de manière centrale ou sensiblement centrale entre les socs d'ameublissement (3, 4) de cette portion d'appareil (1a, 1b, 1c), vue dans la direction transversale (QR).

3. Appareil de travail du sol selon la revendication 1 ou 2,
**caractérisé en ce qu'**un décalage (V) du premier et du deuxième soc d'ameublissement (3, 4), mesuré dans la direction de traction (ZR), est supérieur à la longueur (l) des socs d'ameublissement (3, 4) mesurée dans la direction de traction (ZR).

4. Appareil de travail du sol selon l'une des revendications précédentes, **caractérisé en ce que** le premier et le deuxième soc d'ameublissement (3, 4) présentent chacun dans une zone inférieure une zone de soc courbée vers l'intérieur en direction d'un axe central de portion d'appareil (GMA) s'étendant parallèlement à la direction de traction (ZR), en particulier une zone de soc courbée de manière concave en direction de l'axe central de portion d'appareil (GMA).

5. Appareil de travail du sol selon l'une des revendications précédentes, **caractérisé en ce que** les socs d'ameublissement (3, 4) ont une première portion de soc (3a, 4a) qui coupe le sol et une deuxième portion de soc (3b, 4b) qui forme la pointe du soc.

6. Appareil de travail du sol selon la revendication 5,
**caractérisé en ce que** la première portion de soc (3a, 4a) est prévue au-dessus de la deuxième portion de soc (3a, 4a).

7. Appareil de travail du sol selon la revendication 5 ou 6,
**caractérisé en ce que** la deuxième portion de soc (3b, 4b) présente une longueur, mesurée dans la direction de traction (ZR), qui est supérieure à celle de la première portion de soc (3a, 4a).

8. Appareil de travail du sol selon l'une des revendications 5 à 7,
**caractérisé en ce que** la première portion de soc (3a, 4a) est courbée vers l'intérieur, à savoir vers un axe central de portion d'appareil (GMA) qui s'étend parallèlement à la direction de traction (ZR).

9. Appareil de travail du sol selon l'une des revendications 5 à 8,
**caractérisé en ce que** la deuxième portion de soc (3b, 4b) présente au moins un bord biseauté (5a, 5b, 5c).

10. Appareil de travail du sol selon l'une des revendications 5 à 9,
**caractérisé en ce que** la deuxième portion de soc (3b, 4b) présente dans une zone centrale un biseau longitudinal (5b) s'étendant parallèlement ou sensiblement parallèlement à un axe central de portion d'appareil (GMA).

11. Appareil de travail du sol selon l'une des revendications 5 à 10, **caractérisé en ce que** la deuxième portion de soc (3b, 4b) présente dans une zone avant et/ou arrière un biseau oblique (5a, 5c) s'étendant en oblique par rapport à un axe central de portion d'appareil (GMA).

12. Appareil de travail du sol selon l'une des revendications précédentes, **caractérisé en ce que** le premier et le deuxième soc d'ameublissement (3, 4) provoquent chacun un ameublissement du sol sans le retourner.

13. Appareil de travail du sol selon l'une des revendications précédentes, **caractérisé en ce qu'**un coutre, en particulier un coutre à disque (6), est disposé directement en amont du premier et du deuxième soc d'ameublissement (3, 4).

14. Appareil de travail du sol selon l'une des revendications précédentes, **caractérisé en ce qu'**un ensemble de post-traitement du sol (7), par exemple un rouleau, en particulier un rouleau à lames, est prévu en aval des socs d'ameublissement dans la direction de traction.
